# EUROPEAN PATENT APPLICATION

(11) **EP 1 477 845 A1**
(43) Date of publication of application: **17.11.2004**
(21) Application number: 04252800.0
(22) Date of filing: 14.05.2004
(51) Int. Cl.: G03B 15/00, F16M 11/12

(54) **Turntable drive device**

(30) Priority: 16.05.2003 JP 2003138242; 25.02.2004 JP 2004048882
(71) Applicant: ALPS ELECTRIC CO., LTD., Ota-ku Tokyo 145 (JP)
(72) Inventor: Mizuta, Koji, c/o Alps Electric Co. Ltd., Ota-ku, Tokyo (JP); Hiratate, Yasuhiko, c/o Alps Electric Co. Ltd., Ota-ku, Tokyo (JP)
(74) Representative: Kensett, John Hinton

(57) **Abstract**

There is provided a turntable drive device (1) capable of returning a position of a movable table to a predetermined direction. An outer movable table (4) is rotatably supported by rotating shafts (2a1 and 2b1), and an inner movable table (5) is rotatably supported by rotating shafts (4a and 4b) provided in the outer movable table (4). The inner movable table (5) is rotated about the rotating shafts (4a and 4b) when a connection plate (30) is linearly moved in the X direction. When a connection plate (40) is linearly moved in the Y direction, the outer movable table (4) is rotated together with the inner movable table (5) about the rotating shafts (2a1 and 2b1), based on the engagement of a rack (40c1) formed in the connection plate (40) with a toothed portion (6b) formed in the outer movable table (4).

## Description

### BACKGROUND OF THE INVENTION

### 1. Field of the Invention

The present invention relates to a turntable drive device which can set, for example, the direction of a fixed camera to multi-directions, and more specifically to a turntable drive device which can return a camera to a predetermined set position.

### 2. Description of the Related Art

A fixed camera provided with a conventional turntable drive device is disclosed in Patent Document 1. The camera is a security camera set in which a camera is fixed to a first support frame, the first support frame is rotatably supported by a second support frame, and the second support frame is rotatably supported by support pieces fixed on a base. In the security camera set, rotating shafts of the first support frame and the second support frame are perpendicular to each other, and the camera is rotatably supported by the first and second support frames.

### [Patent Document 1] Japanese Unexamined Patent Application Publication No. 2001-94838

Patent Document 1 discloses a technique in which a cover member covers the entire camera to fit and fix it at a predetermined position after adjusting the photographing direction of the camera. However, in this type of camera, the photographing direction of the camera should be manually adjusted, so it is inconvenient to handle it.

In a camera set provided with a mechanism capable of remotely adjusting the photographing direction of a camera, a rotary motor is provided as a driving source, and thus the rotary motor and a turntable for supporting the camera are connected to each other through a gear. However, in the camera set in which power is transferred through the rotary motor and the gear in this way, there is a problem in that the movement of the camera is not smooth when the camera is moved such that the photographing direction thereof is set to the desired direction.

In addition, in a camera set in which two movable tables are provided to form two rotating shafts, which are perpendicular to each other, and a mechanism capable of setting the photographing direction of a camera, for example, horizontally and vertically, that is, three-dimensionally, is provided, a circuit load can be too large depending upon movement control methods, thereby causing electrical and mechanical trouble.

Since the two movable tables each can be independently rotated about each of the two rotating shafts, the movable tables are always unstable. Accordingly, it is difficult to securely fix a camera member to the unstable movable tables. Furthermore, it is difficult to adjust a tightening torque in screwing up the camera member, and if the camera member is screwed up with a large force, the rotating shafts connecting the two movable tables may be taken off.

Furthermore, if the angles of rotation of the movable tables exceed the maximum allowable angle by external force, the movable tables are disconnected from members for driving the movable tables, so that it is impossible to control a turntable drive device.

### SUMMARY OF THE INVENTION

Accordingly, the present invention is designed to solve the above problems, and it is an object of the present invention to provide a turntable drive device capable of being electrically driven, and of immediately and efficiently returning a movable table to a predetermined direction in a camera.

It is also an object of the present invention to provide a turntable drive device in which an assembly work, specifically, a fitting work of a camera member to a movable table, can be surely performed.

It is another object of the present invention to provide a turntable drive device capable of stably driving a movable table and of preventing the disconnection between the movable table and a member for driving the movable table due to external force.

According to the present invention, there is provided a turntable drive device comprising: a movable table rotatably supported by two shafts perpendicular to each other; first driving means for generating driving force for rotating the movable table about one of the shafts; and second driving means for generating driving force for rotating the movable table about the other of the shafts, wherein a moving element capable of being continuously and linearly moved is provided in each of the first driving means and the second driving means, and wherein conversion means for converting linear movement of the moving elements into rotatory movement of the movable table, position detecting means for detecting positions of the moving elements, and control means for adjusting the inclination of the movable table, based on output values of the respective position detecting means are further provided.

The movable table has an inner movable table on which a support object is mounted and which is rotated by means of the first driving means, and an outer movable table which rotatably supports the inner movable table and is rotated by means of the second driving means.

The conversion means provided in the first driving means may comprise a sliding portion provided in the inner movable table, and a first connection plate being moved together with the moving element, the first connection plate may be provided with a guiding and regulating portion into which the sliding portion is fitted, the sliding portion may be guided in the guiding and regulating portion to allow both the outer movable table and the inner movable table to move only when the second driving means is driven, and only the inner movable table may be moved when the first driving means is driven.

The conversion means provided in the second driving means may comprise a toothed portion that is provided in the outer movable table and is formed in an arc shape of which the center is the center of rotation of the outer movable table, and a rack that engages with the toothed portion and is moved together with the moving element provided in the second driving means.

In the above turntable drive device according to the present invention, the movable table can be manually moved in an arbitrary direction. Further, it is not necessary to construct a deceleration gear through a combination of many gears, thereby simplifying the structure thereof.

It is preferable that the turntable drive device further comprise a storage unit capable of storing previously set position data for returning the movable table to a predetermined position, wherein the previously set position data can be set arbitrarily, and when a power source turns on, or when an instruction to read out the previously set position data is given, the control means compares current position data of the movable table with the previously set position data stored in the storage unit, and generates a driving track for moving the movable table from a current position based on the current position data to a set position based on the previously set position data by driving the first driving means and the second driving means.

The driving track is a track for moving the movable table to the set position by simultaneously driving the first driving means and the second driving means.

The driving track is a track for moving the movable table to the set position by alternately driving the first driving means and the second driving means. As a result, it is possible to reduce loads on circuits, compared with a case of simultaneously driving the first driving means and the second driving means.

It is preferable that the driving track be generated in a smooth curve shape up to the set position.

The driving track may be generated based on a critical value of power consumption or current consumption.

The control means may calculate the difference between a position of the generated track and the current position as a detected value, and cut off the supply of current to the first driving means and the second driving means when the detected value exceeds a predetermined value. In this case, the control means may detect the position data even after cutting off the supply of current, and when the supply of current resumes, the control means may calculate again the driving track from the current position after cutting off the supply of current to the set position and drive the movable table. As a result, it is possible to immediately return the movable table to a predetermined position.

It is preferable that first rotation regulating portions are formed on the lower surface of the inner movable table, and the rotation of the inner movable table about the sliding portion is regulated by holding the first rotation regulating portions. The first rotation regulating portions may be formed, for example, as a pair of protruding portions extending in parallel on both sides of the sliding portion.

In this case, the first rotation regulating portions may be held by an auxiliary member, and in this holding state, the support object may be mounted to the inner movable table.

As a result, since the support object is mounted to the inner movable table, the force applied when mounting the support object can be prevented from being directly applied to the rotating shafts of the movable table. Accordingly, the breakdown of the rotating shaft due to the rotation of the inner movable table about the sliding portion can be prevented, so that it is possible to surely mount the support object to the movable table.

It is preferable that, in one of the outer movable table and the inner movable table, second rotation regulating portions are provided for regulating the rotation of the inner movable table about a shaft provided on the one.

The second rotation regulating portions may be formed, for example, as convex portions protruding from the one of the outer movable table and the inner movable table toward the other thereof. In this case, a pair of the convex portions may be formed on both sides of the shaft provided the one.

Here, the second rotation regulating portions may have a triangular shape, and the rotation of the inner movable table may be regulated by means of regulation surfaces formed of two sides other than an oblique side of three sides of the triangular shape

As a result, even if an impact is applied to the inner movable table, it is possible to prevent the sliding portion from coming off from the guiding and regulating portion due to the impact.

According to the present invention, in a camera set in which the movable table can be electrically driven, the movable table can be immediately and efficiently returned to a predetermined direction.

Further, according to the present invention, the force applied when mounting a support object is not concentrated on the rotating shafts. Therefore, the breakdown of the rotating shafts can be prevented, so that it is possible to surely mount the support object to the movable table.

Furthermore, according to the present invention, the rotation of the inner movable table is regulated by means of the second rotation regulating portions. Therefore, even if an impact is applied to the inner movable table, it is possible to prevent the sliding portion from coming off from the guiding and regulating portion due to the impact.

Embodiments of the present invention will now be described, by way of example, with reference to the accompanying diagrammatic drawings, in which:
Fig. 1 is a plan view illustrating the entire construction of a turntable drive device according to a first embodiment of the present invention;
Fig. 2 is a cross-sectional view taken along the line 2-2 of Fig. 1;
Fig. 3 is a cross-sectional view taken along the line 3-3 of Fig. 1;
Fig. 4 is a cross-sectional view taken along the line 4-4 of Fig. 1;
Fig. 5 is a cross-sectional view taken along the line 5-5 of Fig. 1;
Fig. 6 is a cross-sectional view taken along the line 6-6 of Fig. 1;
Fig. 7 is a block diagram illustrating the entire construction of the turntable drive device;
Fig. 8 is a flowchart illustrating a process performed in a control unit;
Fig. 9 is a front perspective view of an important part of a movable table according to the present invention on which a camera member is not yet mounted;
Fig. 10A is a side view of an important part of an inner movable table according to the present invention as seen from the Y1 direction, and Fig. 10B is a cross-sectional view taken along the line 7-7 of Fig. 9;
Fig. 11A is a front perspective view of an important part of the turntable drive device according to the present invention in which protruding portions are held by an auxiliary member, and Fig. 11B is a side view of the important part in the state of Fig. 11A as seen from the Y2 direction;
Fig. 12 is a partial perspective view illustrating a connecting portion between the outer movable table and the inner movable table according to a third embodiment of the present invention;
Fig. 13 is a side view of the turntable drive device in which second rotation regulating portions are not provided, as seen from the Y1 direction;
Fig. 14 is a side view of the turntable drive device in which the second rotation regulating portions are provided, as seen from the Y1 direction;
Fig. 15 is a side view, similar to Fig. 13, illustrating second rotation regulating portions according to another embodiment; and
Fig. 16 is a partial perspective view illustrating a modified example of the connecting portion between the outer movable table and the inner movable table according to a third embodiment of the present invention.

### DESCRIPTION OF THE PREFERRED EMBODIMENT

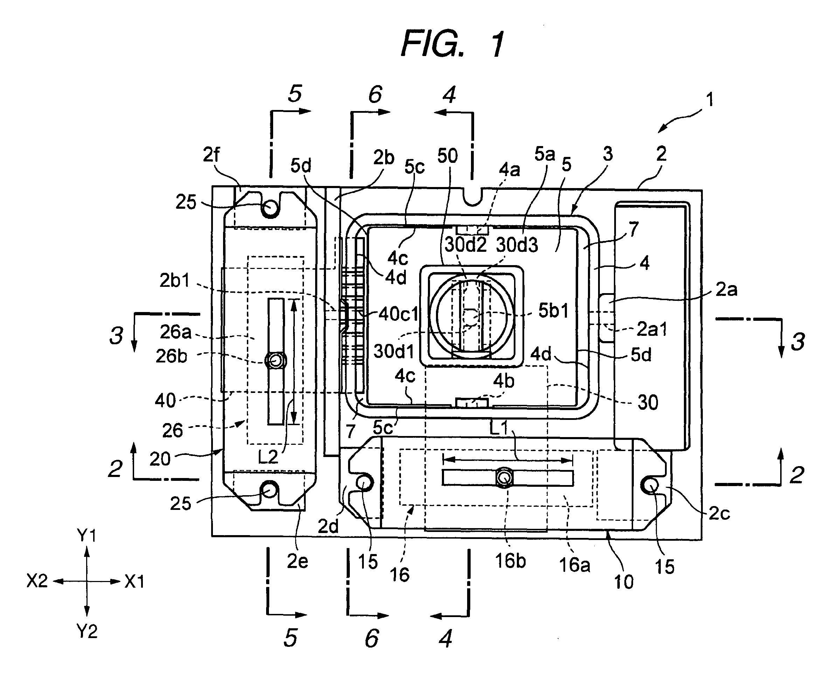

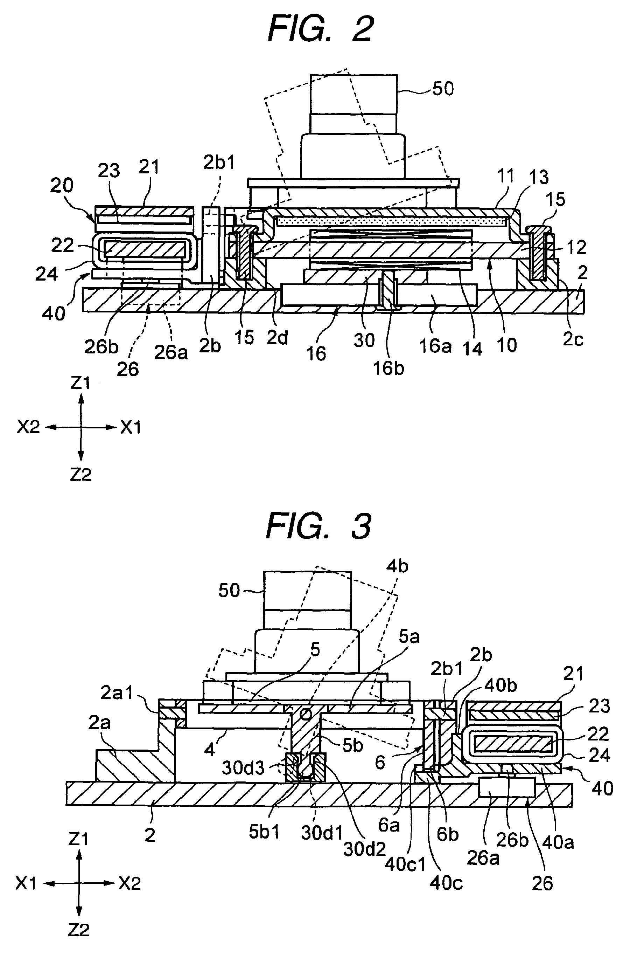

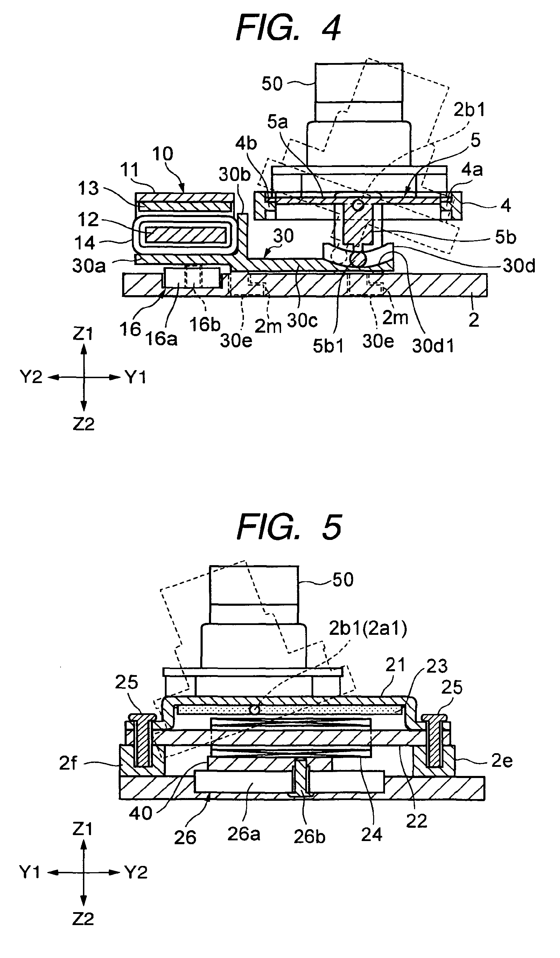

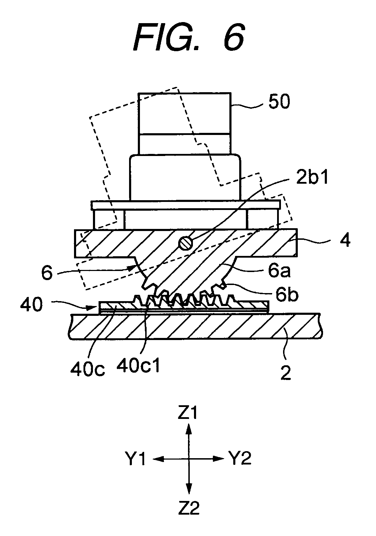

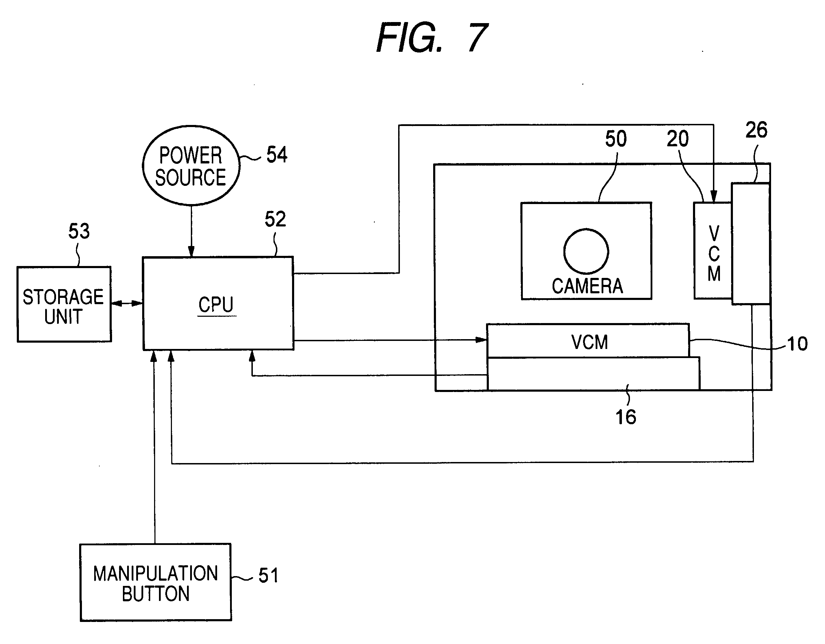

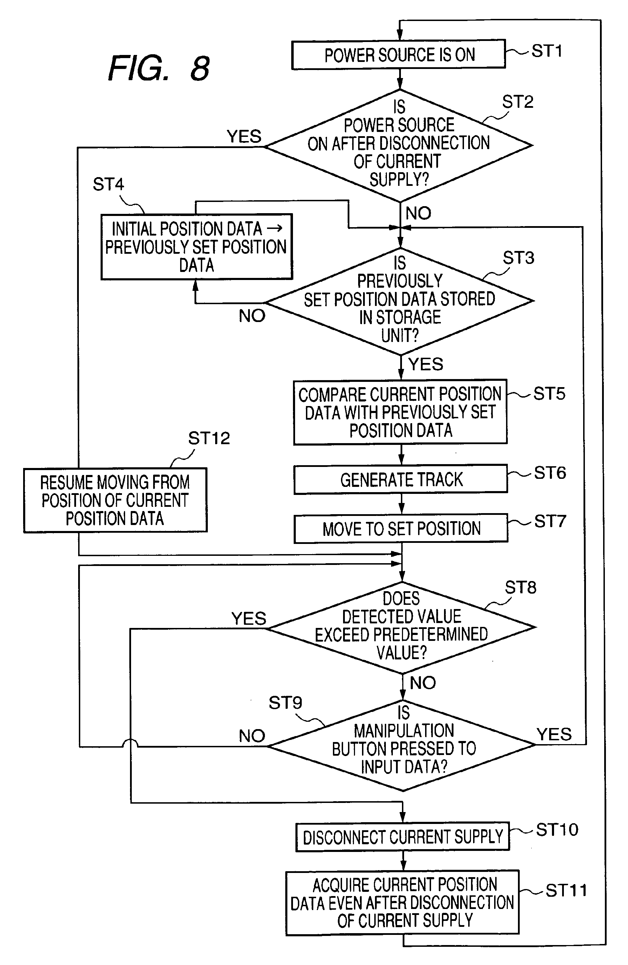

Fig. 1 is a front perspective view illustrating the entire construction of a turntable drive device according to a first embodiment of the present invention, Fig. 2 is a cross-sectional view taken along the line 2-2 of Fig. 1, Fig. 3 is a cross-sectional view taken along the line 3-3 of Fig. 1, Fig. 4 is a cross-sectional view taken along the line 4-4 of Fig. 1, Fig. 5 is a cross-sectional view taken along the line 5-5 of Fig. 1, Fig. 6 is a cross-sectional view taken along the line 6-6 of Fig. 1, Fig. 7 is a functional block diagram, and Fig. 8 is a flowchart.

A turntable drive device 1 according to the first embodiment on which, for example, a camera member 50 is mounted can be used as a camera for a home door phone for identifying visitors, or a camera for a television phone connected to a computer and used through Internet lines. In the following embodiments, the Z direction corresponds to a vertical direction, and the X direction corresponds to a horizontal direction.

The turntable drive device 1 shown in Fig. 1 has a base 2 made of metal or synthetic resin. On the base 2, fixed members 2a and 2b are provided to be separated from each other at a predetermined gap in the X direction, and rotating shafts 2a1 and 2b1 respectively protrude from the surfaces of the fixed members 2a and 2b, which are opposite to each other, so as to face each other.

A movable table 3 is provided between the fixed members 2a and 2b. The movable table 3 is a portion on which the camera member 50 is mounted, and comprises an outer movable table 4 and an inner movable table 5. The outer movable table 4 is formed in a rectangular frame with synthetic resin, and is rotatably supported by the rotating shafts 2a1 and 2b1 on the X1 and X2 sides, respectively. As shown in Fig. 3, a gear 6 vertically extending toward the Y2 side (on the back side) is integrally formed at the edge of the outer movable table 4 in the X2 direction. As shown in Fig. 6, in the gear 6, a semi-circular member 6a is integrally formed therewith, and a toothed part 6b is formed in a portion of the circumference of the semi-circular member 6a.

As shown in Fig. 1, the inner movable table 5 is positioned in a space in the frame of the outer movable table 4. The inner movable table 5 comprises a supporting plate portion 5a formed in a rectangular plate shape with synthetic resin and a guiding shaft 5b vertically extending from the center of the Z-X plane to the Y2 direction (the back side) as shown in Fig. 3, which is integrally formed with the supporting plate 5a. Furthermore, the front end of the guiding shaft 5b extends to a position that is not in contact with the base 2. The front end of the guiding shaft 5b is a spherical sliding portion 5b1.

In addition, the guiding shaft 5b has a construction in which a convex portion protruding from the lower surface of the supporting plate portion 5a in the Z2 direction is formed, a metal guiding shaft extending in the Z2 direction is inserted into the lower surface of the convex portion, and a sliding portion having a smooth sphere shape is integrally formed at the front end of the guiding shaft.

Rotating shafts 4a and 4b protrude from the inner circumference of the outer movable table 4 in the Y2 and Y1 directions, respectively, and the inner movable table 5 is rotatably supported by the rotating shafts 4a and 4b. Rotating shafts 2a1 and 2b1 and the rotating shafts 4a and 4b are perpendicular to each other.

In this embodiment, as shown in Fig. 1, outer surfaces 5c of the supporting plate portion 5a of the inner movable table 5 in the Y1 and Y2 directions are opposed to inner circumferences 4c of the outer movable table 4 in the Y1 and Y2 directions. Furthermore, a gap 7 is formed between outer surfaces 5d of the inner movable table 5 in the X1 and X2 directions and inner surfaces 4d of the outer movable table 4 in the X1 and X2 directions, respectively. The gap 7 is set such that the edges of the supporting plate portion 5a in the X1 and X2 directions are not in contact with the outer movable table 4 when the inner movable table 5 is rotated with the rotating shafts 4a and 4b used as supporting points.

As shown in Fig. 1, on the base 2 on which the movable table 3 is provided, first driving means 10 is provided on the Y2 side of the movable table 3, and second driving means 20 is provided on the X2 side thereof.

As shown in Fig. 2, the first driving means 10 has an upper yoke 11 and a lower yoke 12 which have a plate shape, are made of a magnetic material, and extend in the X direction. The upper yoke 11 and the lower yoke 12 are opposed to each other with a predetermined gap. A magnet 13 that is formed of a permanent magnet and extends in the X direction is fixed to the inner surface of the upper yoke 11 on the Z2 side. The lower yoke 12 is provided with a driving coil 14 wounded with a metal wire, such as a copper wire. The driving coil 14 is shorter than the magnet 13 in the X direction. The ends of the upper yoke 11 on the X1 and X2 sides are bent into an L shape and overlap with the lower yoke, and screws 15 are inserted into the overlapping portions, so that the front ends of the screws 15 are tightened up into fitting portions 2c and 2d provided on the base 2. In this embodiment, the first driving means 10 is a moving coil type in which the driving coil 14 functions as a moving element.

In the magnet 13 of the first driving means 10, for example, a side facing the driving coil 14 is magnetized in the N pole, and a side fixed to the upper yoke 11 is magnetized into the S pole. Therefore, a magnetic field passing through a surface of the driving coil 14 on the Z1 side from the Z1 side to the Z2 side is generated. As a result, when a current is applied to the driving coil 14, driving force (electromagnetic force) toward the X1 and X2 directions is generated against the driving coil 14 on the basis of Fleming's left-hand rule.

A connection plate (a first connection plate) 30 and first position detecting means 16 are provided on the Z2 side of the first driving means 10. The surface of the connection plate 30 on the Z1 side is fixed to the lower surface of the driving coil 14 by an adhesive, etc., and the front end of a moving pin 16b provided in a detection portion 16a of the firs position detecting means 16 is fixed to the surface thereof on the Z2 side. The moving pin 16b can be freely moved in the X direction within the range indicated by reference numeral L1 in Fig. 1.

Therefore, when the driving coil 14 of the first driving means 10 is activated by the application of a current, the connection plate 30 and the moving pin 16b are moved together.

As shown in Fig. 4, the connection plate 30 has a plate portion 30a extending to the Y2 direction along the surface of the driving coil 14 on the Z2 side, a plate portion 30b extending vertically, that is, to the Z1 direction, along the surface of the driving coil 14 on the Y1 side, and a plate portion 30c extending to the Y1 direction along the base 2. A guiding and regulating groove 30d extending to the Y1 direction on the surface of the base 2 is integrally formed at the front end of the plate portion 30c on the Y1 side. The guiding and regulating groove 30d comprises a regulating bottom surface 30d1 having a curvature the center of which is the rotating shaft 2b1 (2a1) and regulating surfaces 30d2 and 30d3 extending in the Y direction at both ends of the regulating bottom surface 30d1 in the X direction, in which the surfaces on the Z1, Y1, and Y2 sides are opened. A gap between the regulating surfaces 30d2 and 30d3 is set to be substantially equal to the diameter of a sphere of the sliding portion 51b.

As shown in Fig. 4, a pair of guide members 30e having an L shaped portion is integrally formed to protrude from the surface of the plate portion 30c on the Z2 side, and guide grooves 2m extending in the X direction are formed in the base 2. In a state in which the guide members 30e are inserted into the guide grooves 2m, the connection plate 30 is guided to freely slide in the X direction.

As shown in Figs. 1 and 5, the second driving means 20 is formed similarly to the first driving means 10, and an upper yoke 21, a lower yoke 22, a magnet 23, and a driving coil 24 are combined and fixed to fitting portions 2e and 2f with screws 25. The second driving means 20 is a moving coil type in which the driving coil 24 functions as a moving element similarly to the first driving means 10, and generates driving force in the Y1 and Y2 directions against the driving coil 24 when a current is applied to the driving coil 24.

In addition, a connection plate (a second connection plate) 40 and second position detecting means 26 are provided on the Z2 side of the second driving means 20. The second position detecting means 26 has the same construction as the first position detecting means 16, and a moving pin 26b is supported by a detection portion 26a to be freely moved in the Y direction within the range indicated by reference numeral L2 in Fig. 1.

As shown in Figs. 3 and 5, the connection plate 40 is fixed to the driving coil 24 by an adhesive, etc., and is also fixed to the moving pin 26b. Therefore, the driving coil 24, the connection plate 40, and the moving pin 26b can be moved together.

The connection plate 40 has a plate portion 40a extending along the surface of the driving coil 24 on the Z2 side, a plate portion 40b extending along the surface thereof on the X1 side, and a plate portion 40c extending along the surface of the base 2. A rack 40c1 of which an uneven surface of saw-teeth extends in the Y direction is formed on the front-end surface of the plate portion 40c on the Z1 side. The rack 40c1 engages with the toothed portion 6b of the gear 6, as shown in Figs. 3 and 6.

The first position detecting means 16 is set such that, for example, when the moving pin 16b is moved to one side of the X direction, a resistance value is increased to obtain a high output voltage, and that, when the moving pin 16b is moved to the other side, the resistance value is decreased to obtain a low output voltage. The second position detecting means 26 is similarly set such that the output voltage is varied in accordance with a position to which the moving pin 26b is moved in the Y direction. In this way, on the basis of the output voltages obtained from the first and second position detecting means 16 and 26, the inclined angles of the inner movable table 5 and the outer movable table 4 can be controlled.

For example, the first and second position detecting means 16 and 26 are linear sensors each comprising a resistance layer extending in a straight line shape and a sliding element sliding on the surface of the resistance layer, and the sliding elements can slide on the surfaces of the resistance layers together with the moving pins 16b and 26b. By applying a predetermined voltage to both ends of the resistance layers, the output voltages corresponding to positions of the moving pins 16b and 26b can be taken from the sliding elements.

In this embodiment, the camera member 50 is mounted on the inner movable table 5 of the turntable drive device 1. If the camera member 50 is used for, for example, a home door phone, image data is generated by the camera member 50, and an image based on the image data is displayed on a monitor connected to the camera member 50. A manipulation button 51 for previously setting the direction of the movable table 3 in the camera member 50 to an arbitrary position is provided in the monitor.

By connecting the camera member 50 to a personal computer, image data can be transmitted through communication lines, such as the Internet. As a result, the camera member may be used as a television phone camera that enables a user to make a call with seeing the opposite party, or as a security camera. In this case, the manipulation button 51 is provided for returning the photographing direction to a predetermined direction.

As shown in Fig. 7, the turntable drive device 1 has a control unit (a CPU) 52, and the manipulation button 51, a storage unit 53, and a power source 54 are connected to the control unit 52. The power source 54 is controlled to supply a predetermined voltage to the control unit 52, the manipulation button 51, the camera member 50, the first and second driving means 10 and 20, and the first and second position detecting means 16 and 26, respectively.

The storage unit 53 stores previously set position data for arbitrarily setting the photographing direction of the camera member 50. The previously set position data is coordinate data held by manipulating the manipulation button 51 when a user sets any photographing direction.

When the manipulation button 51 is manipulated and the control unit 52 reads out the previously set position data from the memory unit 53, the read position data is processed by the control unit 52. Therefore, a predetermined current is applied to the driving coil 14 of the first driving means 10 and the driving coil 20 of the second driving means 20, respectively. In the first driving means 10, when the driving coil 14 is driven in the X direction, the connection plate 30 is moved in the X direction, and the sliding portion 5b1 is pressed in the X direction by means of the regulating surface 30d2 or 30d3 of the guiding and regulating groove 30d. Accordingly, only the inner movable table 5 is rotated with the rotating shafts 4a and 4b used as supporting points. At this time, the sliding portion 5b1 is not moved in the Y direction. In addition, when the connection plate 30 is moved in the X direction, the moving pin 16b is moved in the X direction at the same time, and a resistance value or a voltage value corresponding to the resistance value is varied in accordance with the moved position of the moving pin 16b. The control unit 52 detects the resistance value or the voltage value, and calculates position data in the X direction based on the above value, whereby the amount of current to be applied to the driving coil 14 is adjusted.

In the second driving means 20, when the driving coil 24 is supplied with a current to move in the Y direction, the connection plate 40 and the moving pin 6b are all moved in the Y1-Y2 direction. At that time, as shown in Fig. 4, the sliding portion 5b1 is rotated about the rotating shafts 2a1 and 2b1 along the regulating bottom surface 30d1 of the guiding and regulating groove 30d. At the same time, the connection plate 40 is moved in the Y direction, and the rack 40c1 is moved in the Y direction as shown in Fig. 6. Therefore, the toothed portion 6b engaging with the rack 40c1 is rotated clockwise or counterclockwise about the rotating shafts 2a1 and 2b1. As a result, the outer movable table 4 is rotated in the Y direction about the rotating shafts 2a1 and 2b1 together with the inner movable table 5. By means of the moving pin 26b fixed to the connection plate 40, a resistance value according to the position of the moving pin 26b, or a voltage value corresponding to the resistance value is output to the control unit 52. The control unit 52 adjusts the amount of current to be applied to the driving coil 24 based on the above value.

In this way, the control unit 52 adjusts the amount of current to be applied to the driving coils 14 and 24, whereby the outer movable table 4 and the inner movable table 5 are moved at a position corresponding to the previously set position data.

Furthermore, the sliding portion 5b1 and the connection plate 30 constitute one conversion means according to this embodiment, and the toothed portion 6b and the rack 40c1 constitute another conversion means.

Next, the operation of the control unit 52 provided in the turntable drive device according to the present embodiment will be described with reference to the flowchart shown in Fig. 8.

As shown in step 1 (hereinafter, referred to as step ST1), if the power source of the turntable drive device 1 turns on, it is determined in step ST2 whether the power source turns on after automatically stopping the application of current in order to protect circuits. When the power source first turns on after the turntable drive device 1 is installed, it is determined in step ST3 whether the previously set position data is stored in the storage unit 53 since the power source does not turn on after stopping the application of current. When the previously set position data is not stored in the storage unit 53, that is, when the power source first turns on after installing the turntable drive device 1 or when the storage unit 53 is initialized through a predetermined manipulation, initial position data previously stored at a predetermined position in the turntable drive device 1 is stored in the storage unit 53 as the previously set position data (step ST4).

Then, in step ST5, current position data and the previously set position data are compared to generate a driving track reaching a set position based on the previously set position data (step ST6). The current position data is detected by means of the first and second position detecting means 16 and 26 continuously since the power source turned on. The driving track can be controlled in the following patterns.

For example, the driving track may be controlled such that a current is alternately applied to the driving coil 14 of the first driving means 10 and the driving coil 24 of the second driving means 20. As a result, it is possible to reduce the load of circuits in the device, compared with a case in which the current is simultaneously applied to the driving coil 14 and the driving coil 24. However, the control unit 52 may be controlled to simultaneously drive the driving means 10 and 20.

Alternatively, the movable table 3 may be driven to form a smooth curve track reaching the set position. By controlling the movable table 3 to be driven smoothly in a curve shape, the camera member 50 mounted on the movable table 3 can be moved such that images will be taken without moving slightly. Therefore, it is possible to surely recognize the images during the movement.

In addition, the driving track may be generated according to the critical value of predetermined power consumption or current consumption. The critical value is stored in the storage unit 53, and the control unit 52 always monitors the current and voltage applied from the power source 54. As a result, since an excessive load is not imposed on the circuits, it is possible to reduce the probability that the turntable drive device will get out of order.

In this embodiment, any one pattern of the aforementioned driving tracks may be programmed in the control unit 52, and the turntable drive device may be allowed to operate in accordance with the program. Alternatively, all the patterns of the driving tracks may be programmed, any one pattern may be selected depending upon situations, and the turntable drive device may be controlled on the basis of the selected driving track.

When the track is generated in step ST6, the first driving means 10 and the second driving means 20 are driven to move the movable table 3 to the set position corresponding to the previously set position data (step ST7).

In step ST8, it is determined whether a detected value exceeds a predetermined value. The detected value is a value obtained from the difference between a target position and the current position on the basis of the resistance value (or the voltage value) output in accordance with a position to which the moving pins 16b and 26b have been moved by the movement of the driving coils 14 and 24. Further, the predetermined value is an arbitrary value determined in consideration of the circuit load, and is a critical value set such that the circuits are not out of order due to a large increase in difference between the calculated track position and the current position, or a value set within the range having allowances for the critical value.

In step ST8, when the detected value does not exceed the predetermined value (in case of NO), it is determined in step ST9 whether the manipulation button 51 is pressed to input information. In the state in which the detected value does not exceed the predetermined value, when the manipulation button 51 is pressed to input information during the movement of the movable table 3 (in case of YES), the steps ST3 through ST7 are repeatedly performed. In step ST9, when the input manipulation of the manipulation button 51 is not recognized (in case of No), the process returns to step ST8, and these processes are periodically repeated.

In step ST8, when the detected value exceeds the predetermined value, the current is not applied to circuits in step ST10. Here, the circuits mean the driving coils 14 and 24, but do not means all of the circuits of the apparatus. Examples of cases where the detected value exceeds the predetermined value include a case where the movable table 3 is stopped by hand during the movement of the movable table 3 to the set position, a case where the movable table 3 is forcibly moved by hand. In this case, since the current track largely deviates from the track reaching to the calculated set position, the detected value exceeds the predetermined value. Therefore, the application of current should be stopped to protect the circuits before a large load is imposed to the circuits.

The control unit 52 according to this embodiment is set to acquire the current position data from the first position detecting means 16 and the second position detecting means 26 even after the application of current is stopped (step ST11). As a result, even if the power source turns on again, the movable table 3 can be immediately moved to the previously set position from a position taken when the power source turns on.

Furthermore, the control unit 52 monitors the current to be applied to the driving coils 14 and 24 from the power source 54 or the power consumption thereof, and stops the application of current to the driving means 14 and 24 from the power source 54, when the applied current or the power consumption exceeds a predetermined value. In addition, according to circumstances, the application of current to all of the circuits of the apparatus may be stopped.

Next, a method of mounting the camera member 50 on the inner movable table 5 will be described with reference to a second embodiment.

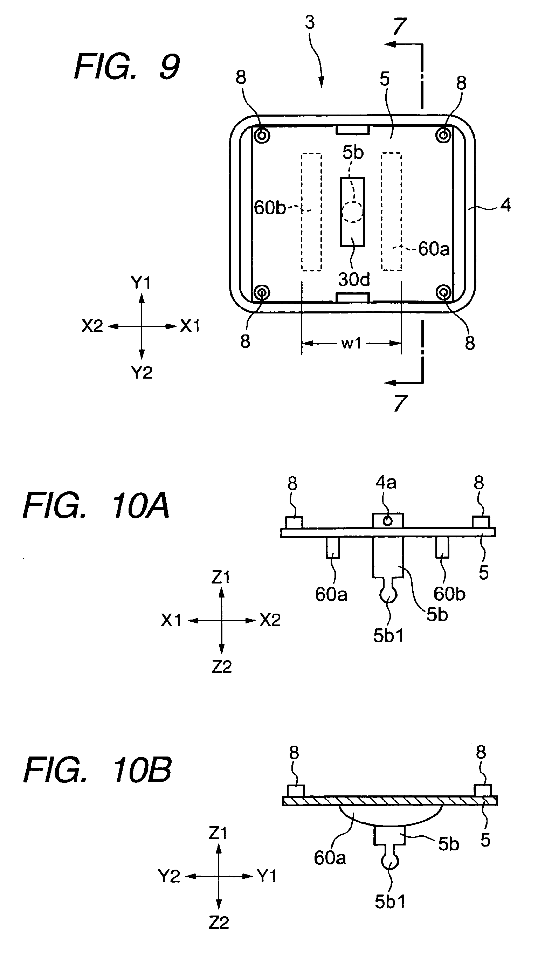

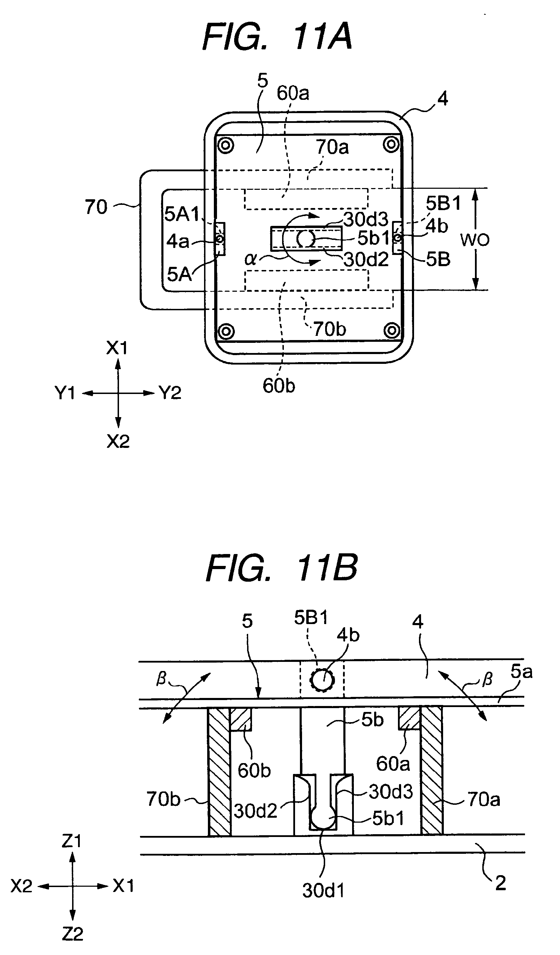

Fig. 9 is a plan view of the movable table on which the camera member is not yet mounted, Fig. 10A is a side view of the inner movable table as seen from the Y1 direction, Fig. 10B is a cross-sectional view taken along the line 7-7 of Fig. 9, Fig. 11A is a plan view, similar to Fig. 9, illustrating a state in which the inner movable table is held by an auxiliary member, and Fig. 11B is a side view illustrating the state of Fig. 11A as seen from the Y2 direction. In the second embodiment, the same elements as those in the first embodiment have the same reference numerals.

The movable table 3 shown as the second embodiment in Fig. 9 has substantially the same construction as the movable table shown in the first embodiment. However, in the movable table 3 shown in the second embodiment, fitting seats 8 are integrally formed at four corners of the surface of the supporting plate portion 5a of the inner movable table 5. As shown in Fig. 9, the number of places to be provided with the fitting seat 8 is not limited to four, but may be at least two. However, when only two fitting seats 8 are provided, it is preferable that a pair of fitting seats 8 be diagonally formed at two corners of the supporting plate portion 5a having a rectangular shape, in order to surely mount the camera member 50 thereon.

As shown in Figs. 10A and 10B, on the back surface of the supporting plate portion 5a, a pair of protruding portions (first rotation regulating portions) 60a and 60b extending in parallel to the Y direction are formed at both sides of the guide shaft 5b in the X direction.

At the centers in the X direction of two sides of the inner circumference of the outer movable table 4 on the Y1 and Y2 sides, the rotating shafts 4a and 4b are formed so as to protrude toward the inside of the frame. At the centers in the X direction of two sides of the outer circumference of the inner movable table 5 on the Y1 side and Y2 sides, supporting portions 5A and 5B are integrally formed so as to protrude in the Z1 direction, and'bearings 5A1 and 5B1 are formed in the Y direction in the supporting portions 5A and 5B. By inserting the rotating shafts 4a and 4b of the outer movable table 4 into the bearings 5A1 and 5B1 of the inner movable table 5, the inner movable table 5 is rotatably supported by the outer movable table 4. On the contrary, the bearings may be provided in the outer movable table 4, and the rotating shafts may be provided in the inner movable table 5.

In order to mount the camera member 50 on the inner movable table 5, for example, an auxiliary member 70 having a substantially U shape shown in Fig. 11A may be used. The auxiliary member 70 has a pair of arms 70a and 70b extending in parallel. A gap W0 between the arm 70a and the arm 70b is set to be equal to or slightly larger than a width W1 between the outsides of the protruding portions 60a and 60b of the supporting plate portion 5a shown in Fig. 9. Furthermore, as shown in Fig. 11B, the height of the auxiliary member 70 in the Z direction is set to be equal to or slightly smaller than the gap between the base 2 and the lower surface of the supporting plate portion 5a.

As shown in Fig. 11A, by inserting the arms 70a and 70b of the auxiliary member 70 from the Y1 side toward the Y2 side, the arms 70a and 70b sandwich and hold the outsides of the protruding portions 60a and 60b. At that time, since the arm 70a holds the protruding portion 60a and the arm 70b holds the protruding portion 60b, it is possible to restrict the inner movable table 5 to rotate about the sliding portion 5b1 as indicated by reference numeral α in Fig. 11A. Furthermore, since the arms 70a and 70b can maintain a horizontal state of the supporting plate portion 5a, it is also possible to prevent the inner movable table 5 from rotating about the rotating shafts 4A and 4B as indicated by reference numeral P in Fig. 11B.

Screw holes (not shown) are formed at four corners of a base of the camera member 50. By fitting screws in a state where the screw holes of the camera member 50 are superposed on the screw holes formed in the fitting seats 8, the camera member 50 is fixed to the inner movable table 5.

At that time, by screwing the camera member 50 to the fitting seats 8 in the state where the inner movable table 5 is held by the auxiliary member 70, it is possible to prevent the inner movable table 5 from rotating in the α direction even if too large tightening torque is applied to the screws. That is, the inner movable table 5 can be prevented from being taken off from the outer movable table 4 due to the coming-off of the rotating shafts 4a and 4b from the bearings 5A1 and 5B1 or the breakdown of the rotating shafts 4a and 4b, resulting from the rotation of the inner movable table 5 in the α direction in the X-Y plane by means of the tightening torque.

Moreover, since the arms 70a and 70b can hold the support plate portion 5a in the horizontal state, it is possible to stably and surely fix the camera member 50 to the inner movable table 5.

In the above embodiment, although it has been described that the auxiliary member 70 holds the outer surfaces of the protruding portions 60a and 60b, the auxiliary member 70 may be inserted between the protruding portion 60a and the protruding portion 60b so as to hold the inner surfaces of the protruding portions 60a and 60b. Alternatively, by using four arms, the auxiliary member may sandwich and hold the inner and outer surfaces of each of the protruding portions 60a and 60b.

The shape of the protruding portions 60a and 60b, functioning as the first rotation regulating portion, is not limited to an elliptical shape shown in Fig. 10B, but may be a circular shape or a rectangular shape. Alternatively, each of the protruding portions 60a and 60b may be composed of a plurality of divided members.

Moreover, in the above description, a pair of the protruding portions 60a and 60b has been exemplified as the first rotation regulating portions. However, for example, the entire area of the protruding portion 60a and the protruding portion 60b may form one protruding portion. In this case, the auxiliary member 70 having a U shape can hold both of the outer surfaces of the protruding portion in the X direction. Further, in this case, by inserting a metal guide shaft having a rod shape, of which the front end is provided with a smooth spherical portion integrally formed therewith, into the center of the protruding portion, the spherical portion can be used as a sliding portion.

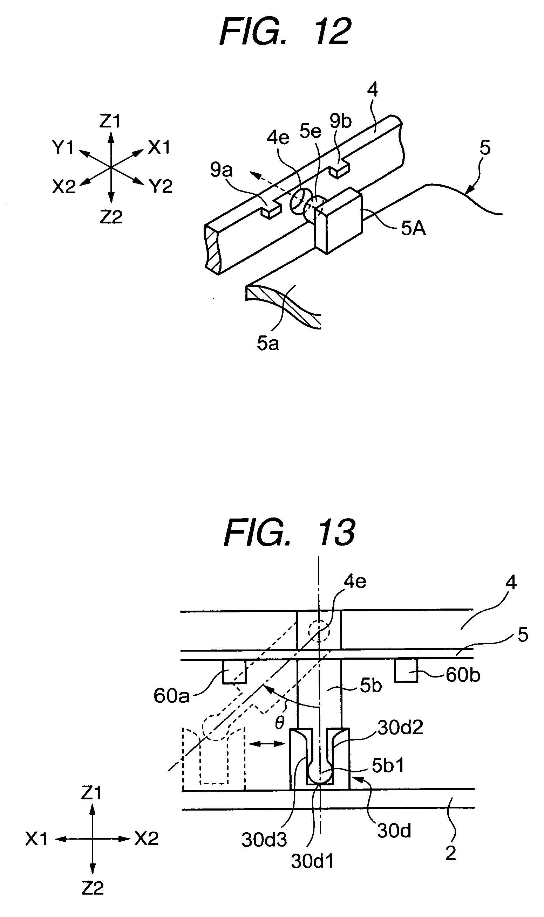

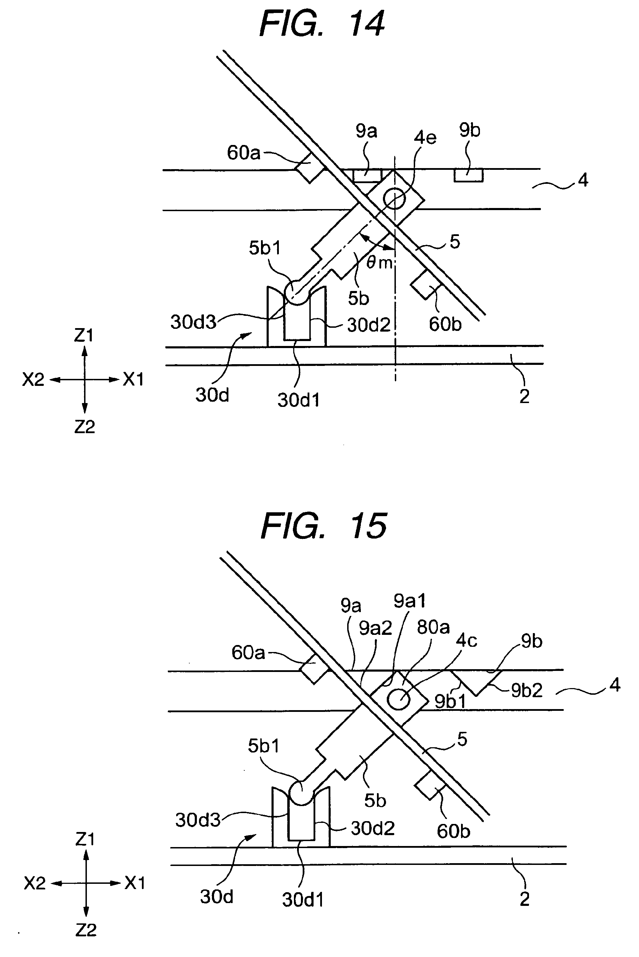

Fig. 12 is a partial perspective view illustrating a connecting portion between the outer movable table 4 and the inner movable table 5 according to a third embodiment of the present invention, Fig. 13 is a side view of the turntable drive device in which the second rotation regulating portion is not provided, as seen from the Y1 direction, Fig. 14 is a side view of the turntable drive device in which the second rotation regulating portion is provided, and Fig. 15 is a side view, similar to Fig. 13, illustrating the second rotation regulating portion according to another embodiment.

In the third embodiment, as shown in Fig. 12, the rotating shaft 5e is formed on the supporting portion 5A of the inner movable table 5 on the Y1 side so as to protrude toward the outside (in the Y1 direction). In addition, in the outer movable table 4 opposite to the rotating shaft 5e, the bearing 4e having a hole shape is formed. On the Y2 side of the inner movable table 5, the bearing 4e and the rotating shaft 5e are also formed.

By inserting the rotating shaft 5e into the bearing 4e, the inner movable table 4 is supported by the outer movable table 5 so as to freely rotate about the rotating shaft 5e.

In the outer movable table 4 on one side (the Y1 side in Fig. 12) of the inner movable table 5, a pair of rotation regulating portions (the second rotation regulating portions) 9a and 9b is provided on both sides of the bearing 4e in the right-left direction (in the X1-X2 direction) so as to protrude from the inner surface of the outer movable table 4. The pair of rotation regulating portions 9a and 9b may also be formed on both sides of the bearing 4e in the right-left direction (the X1-X2 direction) in the outer movable table 4 on the other side (the Y2 side in Fig. 12) of the inner movable table 5, but may be formed on at least one of the Y1 side and the Y2 side.

When the guiding and regulating groove 30d is moved in the X1 direction or the X2 direction from the position indicated by a solid line in Fig. 13 by means of the first driving means 10, the guide shaft 5b is inclined, and thus the inner movable table 5 is also inclined.

As indicated by a dotted line in Fig. 13, in a case where the pair of rotation regulating portions 9a and 9b are not formed, a large movement of the guiding and regulating groove 30d in the X1 direction or the X2 direction causes an increase of the inclined angle θ of the guiding shaft 5b and an increase of the movement of the sliding portion 5b1 in the Z1 direction. Therefore, the sliding portion 5b1 can easily be taken off from the guiding and regulating groove 30d. At that time, if an external impact is given thereto, the sliding portion 5b1 comes off from the guiding and regulating groove 30d, so that the turntable drive device cannot be controlled.

Then, in the third embodiment, since the pair of rotation regulating portions 9a and 9b is formed, it is possible to prevent the sliding portion 5b1 from coming off from the guiding and regulating groove 30d.

That is, when the inner movable table 5 is rotated, for example, clockwise from the horizontal state (θ = 0) indicated by a solid line in Fig. 13 by means of the first driving means 10, the inner movable table 5 becomes the state shown in Fig. 14. At this time, since the edge of the supporting portion 5A comes in contact with the rotation regulating portion 9a, the inclined angle θ of the inner movable table 5 can be restricted. The inclined angle θ of the guide shaft 5b immediately before the sliding portion 5b1 comes off from the guiding and regulating groove 30d is defined as the maximum allowable angle θm.

As a result, by forming the second rotation regulating portions 9a and 9b such that the inclined angle θ of the guide shaft 5b is equal to or less than the maximum allowable angle θm, it is possible to further restrict the clockwise rotation of the inner movable table 5 when the supporting portion 5A comes in contact with the second rotation regulating portions 9a and 9b. For this reason, even if an external impact is applied to the inner movable table 5, specifically, in the horizontal direction, it is possible to prevent the sliding portion 5b1 from coming off from the guiding and regulating groove 30d over the left regulating surface 30d3. Furthermore, when the inner movable table 5 is rotated counterclockwise, the second rotation regulating portion 9b restricts the movement of the inner movable table 5.

The shape of the second rotation regulating portions 9a and 9b is not limited to a rectangular shape shown in Figs. 12 and 14. For example, the shape of the second rotation regulating portions 9a and 9b may be a triangular shape shown in Fig. 15.

When the shape of the second rotation regulating sections 9a and 9b is a rectangular shape, as shown in Figs. 12 and 14, the edge of the supporting portion 5A comes in contact with the edges of the second rotation regulating portions 9a and 9b. Therefore, for example, in a case where the outer movable table 4 is integrally formed with a soft synthetic resin, the edges are deformed with an increase of contact times, so that the maximum allowable angle θm may be easily increased as the time goes.

On the other hand, when the second rotation regulating portions 9a and 9b are formed in a triangular shape shown in Fig. 15, the edge of the supporting portion 5A can be restricted by the regulating surfaces 9a1 and 9b1. The surface of the supporting plate portion 5a of the inner movable table 5 can be regulated by the supporting surfaces 9a2 and 9b2.

In this way, since the edge of the supporting portion 5A and the supporting plate portion 5a can be regulated by the surfaces, it can bear up a horizontal impact, compared with a case of a rectangular shape, so that it is possible to surely prevent the sliding portion 5b1 from coming off from the guiding and regulating groove 30d over the regulating surfaces 30d2 and 30d3.

Furthermore, since the deformation of the second rotation regulating portions 9a and 9b having a triangular shape can be prevented, the maximum allowable angle θm can be maintained for a long time. Therefore, it is possible to stably drive the turntable drive device for a long time.

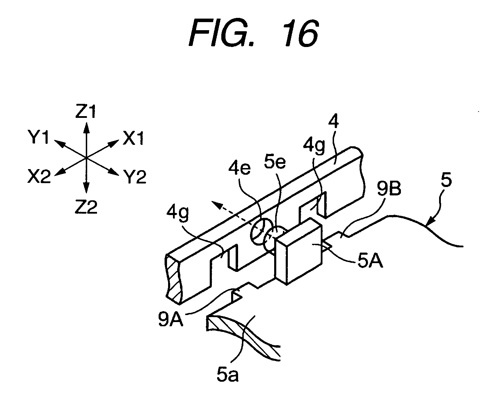

According to this embodiment, in order to adjust the rotation angle θ of the inner movable table 5, the second rotation regulating portions 9a and 9b are provided in the outer movable table 4, and the supporting portion 5A of the inner movable table 5 comes into contact with them. However, the present invention is not limited thereto. For example, as shown in Fig. 16, convex portions (second rotation regulating sections) 9A and 9B may be formed on both sides of the supporting portion 5A so as to protrude toward the outside (in the Y1 direction) from the inner movable table 5, the convex portions 9A and 9B may be movable within notch portions 4g formed in the outer movable table 4, and the convex portions 9A and 9B may come in contact with the upper ends of the notch portions 4g at the maximum allowable angle θm.

## Claims

1. A turntable drive device, comprising:
a movable table rotatably supported by two shafts perpendicular to each other;
first driving means for generating driving force for rotating the movable table about one of the shafts; and
second driving means for generating driving force for rotating the movable table about the other of the shafts,
wherein a moving element capable of being continuously and linearly moved is provided in each of the first driving means and the second driving means, and
wherein conversion means for converting linear movement of the moving elements into rotatory movement of the movable table, position detecting means for detecting positions of the moving elements, and control means for adjusting the inclination of the movable table, based on output values of the respective position detecting means are further provided.

2. The turntable drive device according to Claim 1,
wherein the movable table comprises an inner movable table on which a support object is mounted and which is rotated by the first driving means, and an outer movable table which rotatably supports the inner movable table and is rotated by the second driving means.

3. The turntable drive device according to Claim 2,
wherein the conversion means provided in the first driving means comprises a sliding portion provided in the inner movable table, and a first connection plate being moved together with the moving element,
wherein the first connection plate is provided with a guiding and regulating portion into which the sliding portion is fitted, and
wherein the sliding portion is guided in the guiding and regulating portion to allow both the outer movable table and the inner movable table to move only when the second driving means is driven, and only the inner movable table is moved when the first driving means is driven.

4. The turntable drive device according to Claim 2,
wherein the conversion means provided in the second driving means comprises a toothed portion that is provided in the outer movable table and is formed in an arc shape of which the center is the center of rotation of the outer movable table, and a rack that engages with the toothed portion and is moved together with the moving element provided in the second driving means.

5. The turntable drive device according to Claim 1, further comprising a storage unit capable of storing previously set position data for returning the movable table to a predetermined posture,
wherein the previously set position data can be arbitrarily set, and
wherein, when a power source turns on, or when an instruction to read out the previously set position data is given, the control means compares current position data of the movable table with the previously set position data stored in the storage unit, and generates a driving track for moving the movable table from a current position based on the current position data to a set position based on the previously set position data by driving the first driving means and the second driving means.

6. The turntable drive device according to Claim 5,
wherein the driving track is a track for moving the movable table to the set position by simultaneously driving the first driving means and the second driving means.

7. The turntable drive device according to Claim 5,
wherein the driving track is a track for moving the movable table to the set position by alternately driving the first driving means and the second driving means.

8. The turntable drive device according to Claim 5,
wherein the driving track is generated in a smooth curve shape up to the set position.

9. The turntable drive device according to Claim 5,
wherein the driving track is generated based on a critical value of power consumption or current consumption.

10. The turntable drive device according to Claim 1,
wherein the control means calculates the difference between a position of the generated track and the current position as a detected value, and cuts off the supply of current to the first driving means and the second driving means when the detected value exceeds a predetermined value.

11. The turntable drive device according to Claim 10,
wherein the control means detects the position data even after cutting off the supply of current, and when the supply of current resumes, the control means calculates again the driving track from the current position to the set position and drives the movable table.

12. The turntable drive device according to Claim 1,
wherein the first driving means and the second driving means each are a moving coil type voice coil motor in which a yoke and a magnet are provided on the fixed side thereof and a coil is provided on the moving side thereof.

13. The turntable drive device according to Claim 2,
wherein first rotation regulating portions are formed on the lower surface of the inner movable table, and the rotation of the inner movable table about the sliding portion is regulated by holding the first rotation regulating portions.

14. The turntable drive device according to Claim 13,
wherein the first rotation regulating portions are formed as a pair of protruding portions extending in parallel on both sides of the sliding portion.

15. The turntable drive device according to Claim 13,
wherein the first rotation regulating portions are held by an auxiliary member, and in this holding state, the support object is mounted to the inner movable table.

16. The turntable drive device according to Claim 2,
wherein, in one of the outer movable table and the inner movable table, second rotation regulating portions are provided for regulating the rotation of the inner movable table about a shaft provided on the one.

17. The turntable drive device according to Claim 16,
wherein the second rotation regulating portions are formed as convex portions protruding from the one of the outer movable table and the inner movable table toward the other thereof.

18. The turntable drive device according to Claim 17,
wherein a pair of the convex portions is formed on both sides of the shaft provided the one.

19. The turntable drive device according to Claim 16,
wherein the second rotation regulating portions have a triangular shape, and the rotation of the inner movable table is regulated by means of regulation surfaces formed of two sides other than an oblique side of three sides of the triangular shape.
